# EUROPEAN PATENT APPLICATION

(11) **EP 4 344 074 A1**
(43) Date of publication of application: **27.03.2024**
(21) Application number: 22819138.3
(22) Date of filing: 19.03.2022
(51) Int. Cl.: H04B 7/005

(54) **DATA TRANSMISSION METHOD AND APPARATUS, AND STORAGE MEDIUM AND ELECTRONIC APPARATUS**

(30) Priority: 10.06.2021 CN 202110654381
(71) Applicant: Sanechips Technology Co., Ltd., Shenzhen, Guangdong 518055 (CN)
(72) Inventor: LI, Yingtai, Shenzhen, Guangdong 518055 (CN); LIU, Xing, Shenzhen, Guangdong 518055 (CN); ZHANG, Dingming, Shenzhen, Guangdong 518055 (CN); WANG, Huayong, Shenzhen, Guangdong 518055 (CN)
(74) Representative: Novagraaf Technologies
(86) International application number: PCT/CN2022/081861
(87) International publication number: WO 2022/257533

(57) **Abstract**

Provided are a method for transmitting data and apparatus, and a storage medium and an electronic device The method includes: compressing data according to a compression control instruction, so as to obtain compressed data, and acquiring a compression exponent; according to the compression exponent and a signal processing scaling exponent, determining a transmission exponent during data transmission; and according to an encapsulation format control instruction, based on an ORAN protocol, encapsulating the compressed data and the transmission exponent, so as to obtain encapsulated data, and sending the encapsulated data, such that after receiving the encapsulated data, a receiving end can perform decapsulation and decompression according to corresponding modes, so as to obtain data transmitted by a sending end. The present invention can solve the problem in the related art of it not being possible to directly realize effective data transmission due to the fact that an ORAN protocol does not specify a transmission mode for a signal processing scaling exponent; and a signal processing scaling exponent can be effectively transmitted while ensuring transmission precision, thereby achieving data transmission satisfying the ORAN protocol.

## Description

### Cross-Reference to Related Application

The present invention claims the priority of Chinese Patent Application CN202110654381.5, filed on 10 June 2021 and entitled "Data Transmission Method and Apparatus, Storage Medium and Electronic Device", the content of which is incorporated herein by reference in its entirety.

### Technical Field

The embodiments of the present invention relate to the field of communications, and in particular, to a method and an apparatus for transmitting data, and a storage medium and an electronic device.

### Background

Data transmission is indispensable for any form of communication, and compressed data communication can work only when both an information sender and an information receiver can understand a coding mechanism.

Data compression refers to a technical method for reducing the amount of data to reduce storage space and improve the transmission, storage and processing efficiency thereof while losing information as less as possible, or refers to reorganizing data according to a certain algorithm to reduce redundancy of data and storage space. Since it can help to reduce the consumption of expensive resources such as hard disk space and connection bandwidth, compression is very important, however, compression requires consumption of information processing resources, which can also be costly. The design of a data compression mechanism requires a trade-off between the compressibility, the degree of distortion, the computational resources required, and other various factors that need to be considered.

With the increase of the bandwidth or the number of antennas of the wireless communication system, the data transmission rate will increase in proportion, which will greatly increase the hardware cost and implementation difficulty of the device. Therefore, an efficient data compression and transmission method is an essential part of a communication system.

Based on the reasons above, an Open Radio Access Network (ORAN) protocol specifies a data compression method and an IQ data encapsulation format. The data compression method comprises six compression methods: block floating point (BFP) compression, block scaling compression, µ-law compression, beam space compression, modulation compression and selective resource element (RE) sending compression; and an IQ data encapsulation format describes the arrangement of compressed IQ data and a compression exponent.

In the processing of the 5G baseband signals, digital signal processing such as Fourier transform, inverse fast Fourier transform and power control is indispensable. In current common solutions, these signal processing processes often require scaling of data to reduce resource consumption and concomitantly produce corresponding signal processing scaling exponent. Although a secure real-time transport control ORAN protocol describes a data compression method and a compression exponent transmission manner, an exponent bit width is limited to 4 bits, and it does not specify the foregoing signal processing scaling exponent transmission manner in the digital signal processing process, and thus effective data transmission cannot be directly achieved.

No solution has been proposed for the problem in the related art that effective data transmission cannot be achieved directly due to the fact that the ORAN protocol does not explicitly specify the transmission mode of the signal processing scaling exponent.

### Summary

The embodiments of the present invention provide a method and an apparatus for transmitting data, a storage medium, and an electronic apparatus, so as to at least solve the problem in the related art that effective data transmission cannot be achieved directly due to the fact that the ORAN protocol does not explicitly specify the transmission mode of the signal processing scaling exponent.

According to one embodiment of the present invention, a method for transmitting data is provided, including:
compressing data according to a compression control instruction, so as to obtain compressed data, and acquiring a compression exponent;
determining a transmission exponent during data transmission according to the compression exponent and a signal processing scaling exponent; and
encapsulating the compressed data and the transmission exponent based on an ORAN protocol according to an encapsulation format control instruction, so as to obtain encapsulated data, and sending the encapsulated data.

In an exemplary embodiment, the step of determining the transmission exponent during transmission according to the compression exponent and the signal processing scaling exponent includes:
combining the compression exponent and the signal processing scaling exponent to obtain a combination exponent; and
determining the transmission exponent according to the combination exponent.

In an exemplary embodiment, the method further includes:
determining a data shift factor according to the combination exponent while determining the transmission exponent according to the combination exponent;
performing shifting processing on the compressed data according to the data shift factor; and performing data overflow processing on the compressed data in the shifting processing process.

In an exemplary embodiment, the step of determining the data shift factor according to the combination result while determining the transmission exponent during transmission according to the combination result includes:
when the combination result is greater than 15, determining the transmission exponent as 15, and determining a difference value between the combination result and the transmission exponent as the data shift factor;
when the combination result is greater than or equal to 0 and the combination result is smaller than or equal to 15, determining that the transmission exponent is the combination result, and determining that the data shift factor is 0; and
when the combination result is smaller than 0, determining the transmission exponent as 0, and determining the data shift factor as the combination result.

In an exemplary embodiment, the step of performing shifting processing on the compressed data according to the data shift factor comprises:
when the data shift factor shift is greater than or equal to 0, shifting the compressed data to the left by shift bits, to obtain left shifted data; and
when the shift is smaller than 0, respectively shifting the compressed data to the right by -shift bits, to obtain right-shifted data.

In an exemplary embodiment, the step of performing data overflow processing on the compressed data in the shifting processing includes:
when the left shifted data is greater than the maximum value of N bits of signed data, setting the left shifted data as 2^{*N*-1}-1, wherein the N bits are the size of the compressed data, and N is the number of the compression points.

According to another embodiment of the present invention, a method for transmitting data is also provided, including:
receiving encapsulated data and an encapsulation format control instruction;
decapsulating the encapsulated data by using an ORAN protocol according to an encapsulation format control instruction, so as to obtain encapsulated data and a transmission exponent during data transmission;
determining a signal processing scaling exponent and a decompression exponent based on the transmission exponent; and
decompressing the compressed data according to the decompression exponent to obtain data.

In an exemplary embodiment, the step of determining a signal processing scaling exponent and a decompression exponent based on the transmission exponent comprises:
acquiring a maximum transmission exponent among the transmission exponents;
determining a maximum compression exponent according to the bit width M of the decompressed data and the number N of decompression points;
determining a signal processing scaling exponent based on the maximum transmission exponent and the maximum compression exponent; and
determining a decompression exponent based on the transmission exponent and the signal processing scaling exponent.

In an exemplary embodiment, the step of determining a maximum compression exponent according to the bit width M of the decompressed data and the number N of decompression points includes:
determining a first difference value between the bit width M of the decompressed data and the number N of decompression points; and
determining the first difference value as the maximum compression exponent.

In an exemplary embodiment, the step of determining a signal processing scaling exponent based on the maximum transmission exponent and the maximum compression exponent comprises: determining a second difference between the maximum transmission exponent and the maximum compression exponent; determining the second difference value as the signal processing scaling exponent;
determining a decompression exponent based on the transmission exponent and the signal processing scaling exponent comprises: determining a third difference between the transmission exponent and the signal processing scaling exponent; and determining the third difference value as the signal decompression exponent.

According to another embodiment of the present invention, an apparatus for transmitting data is also provided, including:
a compression module, configured to compress data according to a compression control instruction, so as to obtain compressed data, and acquiring a compression exponent;
a first determination module, configured to determine a transmission exponent during data transmission according to the compression exponent and a signal processing scaling exponent; and
an encapsulation module, configured to encapsulate the compressed data and the transmission exponent based on an ORAN protocol according to an encapsulation format control instruction, so as to obtain encapsulated data, and sending the encapsulated data.

In an exemplary embodiment, the first determination module includes:
a combination submodule, configured to combine the compression exponent and the signal processing scaling exponent to obtain a combination exponent; and
a first determination submodule, configured to determine the transmission exponent according to the combination exponent.

In an exemplary embodiment, the first determination submodule is further configured to determine a data shift factor according to the combination exponent while determining the transmission exponent according to the combination exponent;
the apparatus further includes:
a shift processing submodule configured to perform shifting processing on the compressed data according to the data shift factor; and
an overflow processing submodule configured to perform data overflow processing on the compressed data during the shifting.

In an exemplary embodiment, the first determination submodule includes:
a first determination unit, configured to determine, when the combination result is greater than 15, that the transmission exponent is 15 and determine a difference value between the combination result and the transmission exponent as the data shift factor;
a second determination unit, configured to determine that the transmission exponent is the combination result, and determine that the data shift factor is 0 when the combination result is greater than or equal to 0 and the combination result is smaller than or equal to 15; and
a third determination unit, configured to determine the transmission exponent as 0 and determine the data shift factor as the combination result when the combination result is smaller than 0.

In an exemplary embodiment, the shifting processing submodule includes:
a left shifting unit, configured to shift the compressed data to the left by shift bits if the data shift factor shift is greater than or equal to 0, to obtain left shifted data; and
a righting shift unit, configured to respectively shift the compressed data to the right by -shift bits if the shift is smaller than 0, to obtain right-shifted data.

In an exemplary embodiment, the overflow processing submodule is further configured to:
when the left shifted data is greater than the maximum value of N bits of signed data, setting the left shifted data as 2^{*N*-1}-1, wherein the N bits are the size of the compressed data, and N is the number of the compression points.

According to another embodiment of the present invention, an apparatus for transmitting data is also provided, including:
a receiving module, configured to receive encapsulated data and an encapsulation format control instruction;
a decapsulation module, configured to decapsulate the compressed data by using an ORAN protocol according to an encapsulation format control instruction, so as to obtain encapsulated data and a transmission exponent during data transmission;
a second determination module, configured to determine a signal processing scaling exponent and a decompression exponent based on the transmission exponent; and
a decompression module, configured to decompress the compressed data according to the decompression exponent, to obtain data.

In an exemplary embodiment, the second determination module includes:
an acquisition submodule, configured to acquire a maximum transmission exponent among the transmission exponents;
a second determination submodule, configured to determine a maximum compression exponent according to the bit width M of the decompressed data and the number N of decompression points;
a third determination submodule, configured to determine a signal processing scaling exponent based on the maximum transmission exponent and the maximum compression exponent; and
a fourth determination submodule, configured to determine a decompression exponent according to the transmission exponent and the signal processing scaling exponent.

In an exemplary embodiment, the second determination submodule is further configured to:
determine a first difference value between the bit width M of the decompressed data and the number N of decompression points; and
determine the first difference value as the maximum compression exponent.

In an exemplary embodiment, the third determination submodule is further configured to:
determine a second difference between the maximum transmission exponent and the maximum compression exponent; and
determine the second difference value as the signal processing scaling exponent;
the fourth determination submodule is further configured to determine a third difference between the transmission exponent and the signal processing scaling exponent; and
determine the third difference value as the signal decompression exponent.

According to another embodiment of the present invention, a computer-readable storage medium is further provided. The storage medium stores a computer program, wherein the computer program is configured to execute the steps in any one of the method embodiments when running.

According to another embodiment of the present invention, further provided is an electronic device, including a memory and a processor, wherein the memory stores a computer program, and the processor is configured to run the computer program to execute the steps in any one of the method embodiments.

In the embodiments of the present invention, compressing data according to a compression control instruction, so as to obtain compressed data, and acquiring a compression exponent; according to the compression exponent and a signal processing scaling exponent, determining a transmission exponent during data transmission; and according to an encapsulation format control instruction, based on an ORAN protocol, encapsulating the compressed data and the transmission exponent, so as to obtain encapsulated data, and sending the encapsulated data, such that after receiving the encapsulated data, a receiving end can perform decapsulation and decompression according to corresponding modes, so as to obtain data transmitted by a sending end. The present invention can solve the problem in the related art of it not being possible to directly realize effective data transmission due to the fact that an ORAN protocol does not specify a transmission mode for a signal processing scaling exponent; and a signal processing scaling exponent can be effectively transmitted while ensuring transmission precision, thereby achieving data transmission satisfying the ORAN protocol.

### Brief Description of the Drawings

Fig. 1 is a hardware structure block diagram of a mobile terminal of a method for transmitting data according to an embodiment of the present invention;
Fig. 2 is a flowchart I of a method for transmitting data according to an embodiment of the present invention;
Fig. 3 is a flowchart II of a method for transmitting data according to an embodiment of the present invention;
Fig. 4 is a block diagram of data encapsulation based on the ORAN protocol according to the present embodiment;
Fig. 5 is a flowchart of data encapsulation based on the ORAN protocol according to the present embodiment;
Fig. 6 is a schematic diagram I of data encapsulation based on the ORAN protocol according to the present embodiment;
Fig. 7 is a schematic diagram II of data encapsulation based on the ORAN protocol according to the present embodiment;
Fig. 8 is a flowchart of data receiving based on the ORAN protocol according to the present embodiment;
Fig. 9 is a block diagram I of an apparatus for transmitting data according to the present embodiment; and
Fig. 10 is a block diagram II of an apparatus for transmitting data according to the present embodiment.

### Detailed Description of the Embodiments

The embodiments of the present invention are described in detail with reference to the accompanying drawings and in conjunction with the embodiments.

It should be noted that, the terms "first", "second", etc. in the description, claims and drawings of the present application are used to distinguish similar objects, and do not need to be used to describe a specific order or sequence.

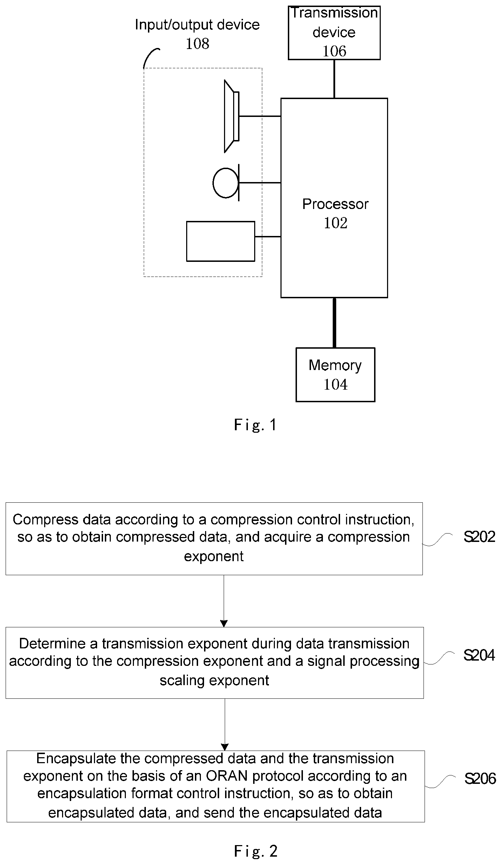

The method embodiment provided in the embodiment of the present application may be executed in a mobile terminal, a computer terminal, or a similar computing device. Taking a mobile terminal as an example, Fig. 1 is a hardware structure block diagram of a mobile terminal of a method for transmitting data according to an embodiment of the present invention. As shown in Fig. 1, the mobile terminal may include one or more (only one is shown in Fig. 1) processors 102 (the processors 102 may include, but are not limited to, a microprocessor MCU or a processing device such as a programmable logic device FPGA) and a memory 104 configured to store data, wherein the mobile terminal can further include a transmission apparatus 106 for a communication function and an input/output device 108. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 104 may be configured to store a computer program, for example, a software program and a module of application software, such as a computer program corresponding to the method for sending data in the embodiments of the present invention. The processor 102 runs the computer program stored in the memory 104, so as to execute various function applications and service chain address pool slicing processing, i.e. implementing the described method. The memory 104 may include a high-speed random access memory, and may also include non-volatile memories, such as one or more magnetic storage devices, flash memories, or other non-volatile solid-state memories. In some instances, the memory 104 may further include a memory remotely located from the processor 102, and the remote memory may be connected to the mobile terminal by a network. Examples of the network above includes, but is not limited to, an Internet, intranets, a local area network, a mobile communication network, and combinations thereof.

The transmission apparatus 106 is configured to receive or transmit data by a network. Specific examples of the network may include a wireless network provided by a communication provider of the mobile terminal. In one example, the transmission apparatus 106 includes a network interface controller (NIC) which may be connected to other network devices by means of a base station, thereby being able to communicate with the Internet. In one example, the transmission apparatus 106 may be a radio frequency (RF) module for communicating wirelessly with the Internet.

The present embodiment provides a method for transmitting data running on the mobile terminal or network architecture, which is applied to a terminal. The terminal accesses a current master node (MN) cell and a current secondary node (SN) cell of a source area by means of dual connection (DC). Fig. 2 is a flowchart I of a method for transmitting data according to an embodiment of the present invention. As shown in Fig. 2, the flow includes the following steps:
S202: compressing data according to a compression control instruction, so as to obtain compressed data, and acquiring a compression exponent;
S204: determining a transmission exponent during data transmission according to the compression exponent and a signal processing scaling exponent;
in the present embodiment, step S204 may specifically include: combining the compression exponent and the signal processing scaling exponent to obtain a combination exponent; and determining the transmission exponent according to the combination exponent;
S206: encapsulating the compressed data and the transmission exponent based on an ORAN protocol according to an encapsulation format control instruction, so as to obtain encapsulated data, and sending the encapsulated data.

By means of steps S202 to S206, the problem in the related art that effective data transmission cannot be achieved directly due to the fact that the ORAN protocol does not explicitly specify the transmission mode of the signal processing scaling exponent can be solved, and a signal processing scaling exponent can be effectively transmitted while ensuring transmission precision, thereby achieving data transmission satisfying the ORAN protocol.

In an exemplary embodiment, the method may further include:
S1, while determining the transmission exponent according to the combination exponent, determining a data shift factor according to the combination exponent;
further, the foregoing step S1 may specifically include: if the combination result is greater than 15, determining the transmission exponent as 15, and determining a difference value between the combination result and the transmission exponent as the data shift factor; if the combination result is greater than or equal to 0 and the combination result is smaller than or equal to 15, determining that the transmission exponent is the combination result, and determining that the data shift factor is 0; and when the combination result is smaller than 0, determining the transmission exponent as 0, and determining the data shift factor as the combination result;
S2, performing shifting processing on the compressed data according to the data shift factor,
further, the foregoing step S2 may specifically include: if the data shift factor shift is greater than or equal to 0, shifting the compressed data to the left by shift bits, to obtain left shifted data; and if the shift is smaller than 0, respectively shifting the compressed data to the right by -shift bits, to obtain right-shifted data;
S3, performing data overflow processing on the compressed data in the shifting processing process,
further, the foregoing step S3 may specifically include: if the left shifted data is greater than the maximum value of N bits of signed data, setting the left shifted data as 2^{*N*-1} -1, wherein the N bits are the size of the compressed data, and N is the number of the compression points.

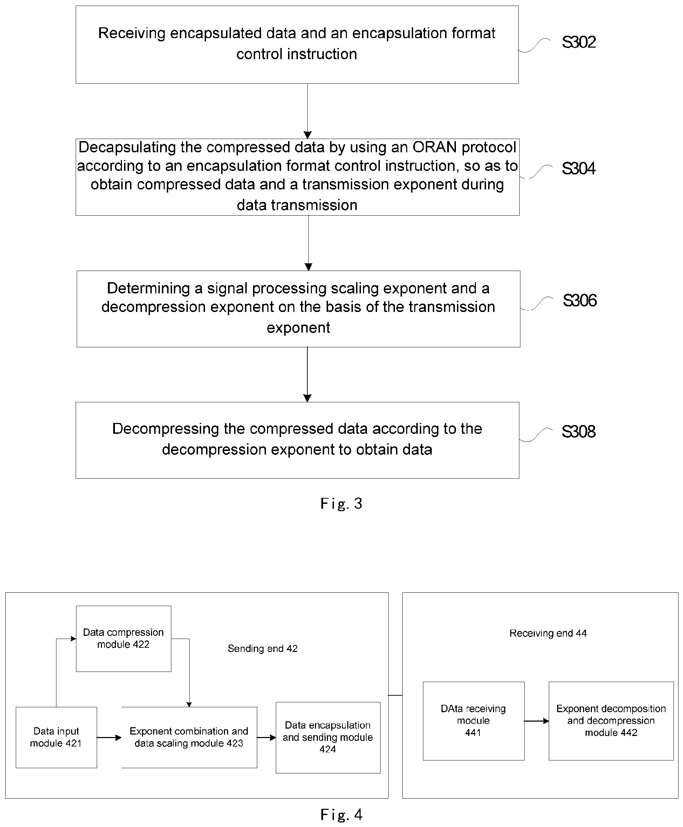

According to another embodiment of the present invention, further provided is a method for transmitting data. Fig. 3 is a flowchart II of a method for transmitting data according to an embodiment of the present invention, as shown in Fig. 3, the method includes the following steps:
step S302: receiving encapsulated data and an encapsulation format control instruction;
step S304: decapsulating the compressed data by using an ORAN protocol according to an encapsulation format control instruction, so as to obtain compressed data and a transmission exponent during data transmission;
step S306: determining a signal processing scaling exponent and a decompression exponent based on the transmission exponent; and
step S308: decompressing the compressed data according to the decompression exponent to obtain data.

By means of steps S302 to S308, the problem in the related art that effective data transmission cannot be achieved directly due to the fact that the ORAN protocol does not explicitly specify the transmission mode of the signal processing scaling exponent can be solved, and a signal processing scaling exponent can be effectively transmitted while ensuring transmission precision, thereby achieving data transmission satisfying the ORAN protocol.

In an exemplary embodiment, the foregoing step S306 may specifically include:
acquiring a maximum transmission exponent among the transmission exponents;
determining a maximum compression exponent according to the bit width M of the decompressed data and the number N of decompression points, specifically, determining a first difference value between the bit width M of the decompressed data and the number N of decompression points; determining the first difference value as the maximum compression exponent;
determining a signal processing scaling exponent based on the maximum transmission exponent and the maximum compression exponent, specifically, determining a second difference between the maximum transmission exponent and the maximum compression exponent; determining the second difference value as the signal processing scaling exponent;
determining a decompression exponent based on the transmission exponent and the signal processing scaling exponent, specifically, determining a third difference between the transmission exponent and the signal processing scaling exponent; and determining the third difference value as the signal decompression exponent.

The present embodiment is applied to data transmission in 5G wireless mobile communication. Based on a data compression/decompression method and an IQ data encapsulation format which are proposed by an ORAN protocol, a specific data transmission scheme is proposed. While ensuring transmission precision, the scheme can effectively transmit data scaling exponents in digital signal processing and data compression processes such as Fourier transform or inverse Fourier transform and power control, thereby achieving data transmission satisfying the ORAN protocol, effectively reducing storage space, and improving the transmission, storage and processing efficiency thereof. Although the ORAN protocol describes a data compression method and a compression exponent transmission manner, a scaling exponent transmission manner in a digital signal processing process is not specified, and thus effective data transmission cannot be directly achieved.

Fig. 4 is a block diagram of data encapsulation based on the ORAN protocol according to the present embodiment. As shown in Fig. 4, the present invention relates to signal processing of two parts, i.e., a sending end 42 and a receiving end 44; the sending end 42 mainly includes a data input module 421, a data compression module 422, an exponent combination and data scaling module 423, and a data encapsulation and sending module 424. The receiving end 44 mainly includes a data receiving module 441, and an exponent decomposition and decompression module 442.

The data input module 421 is configured to mainly complete functions such as data input, signal processing scaling exponent input, compression mode, point control instruction input and encapsulation format control instruction input, and the compression mode may be BFP compression and block scaling compression which are proposed by the ORAN.

The data compression module 422 is configured to complete data compression according to the compression control instruction and obtain a corresponding compression exponent.

The sending end exponent combination and data scaling module 423 is configured to combine a signal processing scaling exponent and a compression exponent, obtain an exponent for transmission according to a combination result, shift data, and perform data overflow processing during the shifting processing.

The sending end data encapsulation and sending module 424 is configured to perform data encapsulation and sending in accordance with the requirements of an ORAN protocol according to the encapsulation format control instruction.

The data receiving module 441 is configured to receive data, which mainly including compressed data, a decompression control instruction, a combined scaling exponent, an encapsulation format control instruction, etc., and perform format conversion on data according to the encapsulation format control instruction.

The data decomposition and decompression module 442 is configured to disassemble the combined compression exponent to obtain a compression exponent and a digital signal processing and scaling exponent, and decompress the data under the control of the decompression control instruction according to the obtained compression exponent.

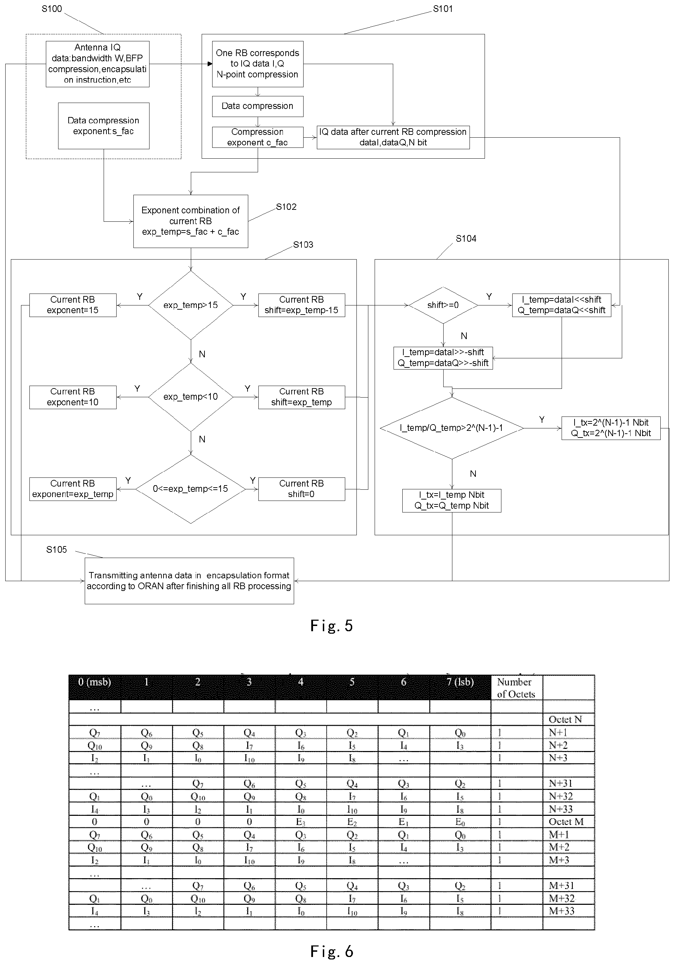

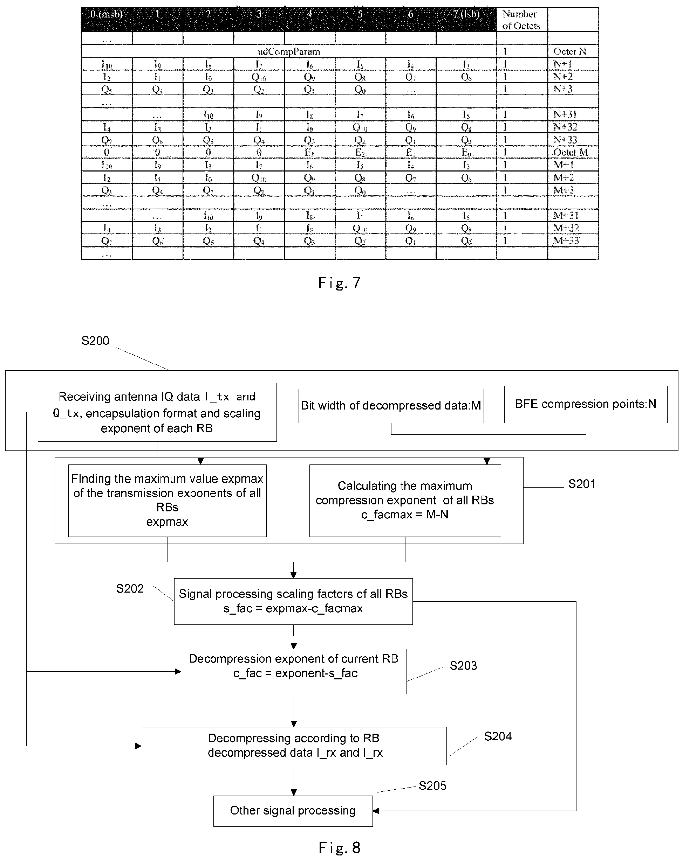

Fig. 5 is a flowchart of data encapsulation based on the ORAN protocol according to the present embodiment. As shown in Fig. 5, the following steps are included:
step S100, acquiring, from a preceding-state signal processing process, IQ data I and Q to be compressed, a preceding-state data compression exponent s_fac, a compression control instruction and an ORAN encapsulation instruction, wherein the IQ data bandwidth is W bit, s_fac represents a scaling bit of the data in the preceding-stage signal processing process, the compression control instruction determines the number N of the compression points (i.e. the compressed data is N bit, N<W), in the ORAN protocol, there are two data encapsulation arrangements: big-endian and small-endian, and the ORAN encapsulation instruction controls the specific big-endian arrangement and little-endian arrangement; after the described relevant data and information are obtained, the process proceeds to step S101;
step S101, according to a compression instruction, performing data compression by taking an RB (for one RB, N-point compression is performed in a unit of 12 pairs of IQ data) as a unit, wherein a compression algorithm may use BFP compression and block scaling compression in an ORAN protocol, reference can be made to the ORAN protocol for a specific compression algorithm, after the compression processing of a current data set is completed and a compression exponent c_fac and compressed data are obtained, it proceeds to step S102;
step S102, summing a scaling exponent s_fac and a compression exponent c_fac by taking an RB as a unit, to obtain a combination exponent exp_temp, wherein the scaling exponent s_fac is obtained in step S100, and the compression exponent c_fac of each RB is obtained by calculation in step S101, and after exponent combination of the current RB is finished, it proceeds to step S103;
step S103, according to the combination exponent exp_temp, calculating an exponent and a data shift factor sent by the current RB, wherein when exp_temp> 15, exponent = 15, shift = exp_temp-15; when 15 >= exp_temp>= 0, exponent = exp_temp, shift = 0; and when exp_temp< 0, exponent = 0, shift = exp_temp; jumping to step S104;
step S104, based on the data shift factor calculated in step S103, performing shifting and overflow prevention processing on the N bit IQ data datal and dataQ obtained by compressing the current RB obtained in step S101, to obtain the data I_tx and Q_tx sending by the current RB, wherein the data shifting process is as follows: when shift> = 0, datal and dataQ are respectively shifted to the left by shift bits; and when shift<0, datal and dataQ are respectively shifted to the right by -shift bits; the overflow prevention processing may adopt, but is not limited to, the following method: when the left-shifted data is greater than the maximum value 2^(N-1)-1 of the N-bit signed data, setting the left-shifted data to 2^(N-1)-1; otherwise, making no change; after shifting and overflow prevention processing are performed on the 12 pairs of compressed data of the current RB, the process proceeds to step S105,
step S105: after repeating step S101 to step S104 to obtain the sending data I_tx and Q_tx of all RBs and the transmission exponent, encapsulating and transmitting the data in a data encapsulation format according to the ORAN protocol shown in Figs. 6 and 7 under the control of the ORAN encapsulation instruction;

Fig. 8 is a flowchart of data receiving based on the ORAN protocol according to the present embodiment. As shown in Fig. 8, the following steps are included:
step S200: receiving information such as data sent by a sending end, a data encapsulation instruction, a decompression algorithm, the decompression point number N, the bit width M of decompressed data, etc., and parsing data according to the format of the big-endian and small-endian specified by an encapsulation instruction, so as to obtain compressed data I_tx and Q_tx of each RB and a transmission exponent, and proceeding to step S201;
step S201, finding the maximum value expmax of the transmission exponents of all RBs in step S200, calculating the maximum compression exponent c_facmax = M-N, and proceeding to step S202;
step S202, calculating the signal processing scaling factors s_fac = expmax-c_facmax of all RBs, and proceeding to step S203;
step S203, calculating the decompression exponent in units of RBs; according to the transmission exponent of each RB obtained in step S200 and the signal processing scaling exponents s_fac of all the RBs obtained in step S202, calculating a decompression exponent c_fac = exponent-s_fac of each RB, and proceeding to step S204;
step S204: decompressing the current RB data according to the decompression exponent c_fac obtained in step S203, wherein the decompression algorithm may be a BFP and block scaling decompression algorithm in the ORAN protocol, and proceeding to step S205;
step S205: repeating step S203 and step S204 to complete the decompression of all RB data and the reception of the data and the signal processing scaling exponent, and using same for subsequent signal processing.

The present embodiment overcomes the problem that an existing ORAN protocol cannot directly transmit a signal processing scaling exponent, and provides a specific high-precision data transmission solution. The solution can effectively transmit a data scaling exponent in digital signal processing and data compression processes, such as FFT/IFFT transformation and power control, while ensuring transmission precision, thereby achieving data transmission satisfying the ORAN protocol. By means of the application of the present solution, the flexibility of dynamic range and resource configuration in a signal processing and compression process can be improved on the premise of satisfying an ORAN protocol, thereby effectively reducing storage space and improving the transmission, storage and processing efficiency thereof.

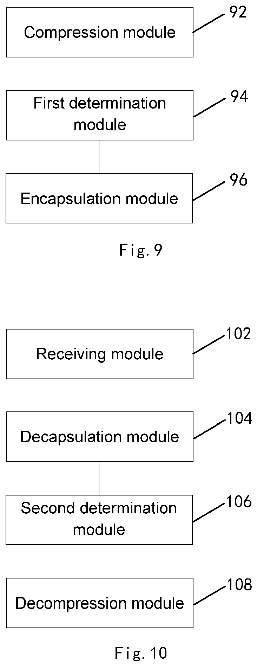

According to another embodiment of the present invention, an apparatus for transmitting data is also provided. Fig. 9 is a block diagram I of an apparatus for transmitting data according to the present embodiment, and as shown in Fig. 9, the apparatus includes:
a compression module 92, configured to compress data according to a compression control instruction, so as to obtain compressed data, and acquiring a compression exponent;
a first determination module 94, configured to determine a transmission exponent during data transmission according to the compression exponent and a signal processing scaling exponent; and
an encapsulation module 96, configured to encapsulate the compressed data and the transmission exponent based on an ORAN protocol according to an encapsulation format control instruction, so as to obtain encapsulated data, and sending the encapsulated data.

In an exemplary embodiment, the first determination module 94 includes:
a combination submodule, configured to combine the compression exponent and the signal processing scaling exponent to obtain a combination exponent; and
a first determination submodule, configured to determine the transmission exponent according to the combination exponent.

In an exemplary embodiment, the first determination submodule is further configured to determine a data shift factor according to the combination exponent while determining the transmission exponent according to the combination exponent;
the apparatus further includes: a shift processing submodule, configured to perform shifting processing on the compressed data according to the data shift factor; and
an overflow processing submodule, configured to perform data overflow processing on the compressed data during the shifting.

In an exemplary embodiment, the first determination submodule includes:
a first determination unit, configured to determine, if the combination result is greater than 15, that the transmission exponent is 15 and determine a difference value between the combination result and the transmission exponent as the data shift factor;
a second determination unit, configured to determine that the transmission exponent is the combination result, and determine that the data shift factor is 0 if the combination result is greater than or equal to 0 and the combination result is smaller than or equal to 15; and
a third determination unit, configured to determine the transmission exponent as 0 and determine the data shift factor as the combination result when the combination result is smaller than 0.

In an exemplary embodiment, the shifting processing submodule includes:
a left shifting unit, configured to shift the compressed data to the left by shift bits if the data shift factor shift is greater than or equal to 0, to obtain left shifted data; and
a righting shift unit, configured to respectively shift the compressed data to the right by -shift bits if the shift is smaller than 0, to obtain right-shifted data.

In an exemplary embodiment, the overflow processing submodule is further configured to:
when the left shifted data is greater than the maximum value of N bits of signed data, set the left shifted data as 2^{*N*-1} -1, wherein the N bits are the size of the compressed data, and N is the number of the compression points.

According to another embodiment of the present invention, an apparatus for transmitting data is also provided. Fig. 10 is a block diagram II of an apparatus for transmitting data according to the present embodiment, and as shown in Fig. 10, the apparatus includes:
a receiving module 102, configured to receive encapsulated data and an encapsulation format control instruction;
a decapsulation module 104, configured to decapsulate the compressed data by using an ORAN protocol according to an encapsulation format control instruction, so as to obtain encapsulated data and a transmission exponent during data transmission;
a second determination module 106, configured to determine a signal processing scaling exponent and a decompression exponent based on the transmission exponent;
a decompression module 108, configured to decompress the compressed data according to the decompression exponent, to obtain data.

In an exemplary embodiment, the second determination module 106 includes:
an acquisition submodule configured to acquire a maximum transmission exponent among the transmission exponents;
a second determination submodule, configured to determine a maximum compression exponent according to the bit width M of the decompressed data and the number N of decompression points;
a third determination submodule, configured to determine a signal processing scaling exponent based on the maximum transmission exponent and the maximum compression exponent; and
a fourth determination submodule, configured to determine a decompression exponent according to the transmission exponent and the signal processing scaling exponent.

In an exemplary embodiment, the second determination submodule is further configured to:
determining a first difference value between the bit width M of the decompressed data and the number N of decompression points;
determining the first difference value as the maximum compression exponent.

In an exemplary embodiment, the third determination submodule is further configured to:
determine a second difference between the maximum transmission exponent and the maximum compression exponent; and
determine the second difference value as the signal processing scaling exponent;
the fourth determination submodule is further configured to determine a third difference between the transmission exponent and the signal processing scaling exponent; and
determine the third difference value as the signal decompression exponent.

The embodiments of the present invention further provide a computer readable storage medium storing a computer program, wherein the computer program is configured to execute, when running, the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present invention further provide an electronic apparatus, including a memory and a processor; the memory stores a computer program, and the processor is configured to run the computer program, so as to execute the operations in any one of the method embodiments.

In an exemplary embodiment, the electronic device can further include a transmission apparatus and an input/output device, wherein the transmission apparatus is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present invention can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present invention is not limited to any specific hardware and software combinations.

The content above only relates to preferred embodiments of the present invention, and is not intended to limit the present invention. For a person skilled in the art, the present invention may have various modifications and changes. Any modifications, equivalent replacements, improvements, etc. made within the principle of the present invention shall all fall within the scope of protection of the present invention.

## Claims

1. A method for transmitting data, comprising:
compressing data according to a compression control instruction, to obtain compressed data, and acquiring a compression exponent;
determining a transmission exponent for data transmission according to the compression exponent and a signal processing scaling exponent; and
encapsulating the compressed data and the transmission exponent based on an Open Radio Access Network, ORAN, protocol according to an encapsulation format control instruction, so as to obtain encapsulated data, and sending the encapsulated data.

2. The method according to claim 1, wherein the step of determining the transmission exponent during transmission according to the compression exponent and the signal processing scaling exponent comprises:
combining the compression exponent and the signal processing scaling exponent to obtain a combination exponent; and
determining the transmission exponent according to the combination exponent.

3. The method according to claim 2, wherein the method further comprises:
determining a data shift factor according to the combination exponent while determining the transmission exponent according to the combination exponent;
performing shifting processing on the compressed data according to the data shift factor; and
performing data overflow processing on the compressed data in the shifting processing process.

4. The method according to claim 3, wherein the step of determining a data shift factor according to the combination result while determining the transmission exponent during transmission according to the combination result comprises:
when the combination result is greater than 15, determining the transmission exponent as 15, and determining a difference value between the combination result and the transmission exponent as the data shift factor;
when the combination result is greater than or equal to 0 and the combination result is smaller than or equal to 15, determining that the transmission exponent is the combination result, and determining that the data shift factor is 0;
when the combination result is smaller than 0, determining the transmission exponent as 0, and determining the data shift factor as the combination result.

5. The method according to claim 4, wherein the step of performing shifting processing on the compressed data according to the data shift factor comprises:
when the data shift factor shift is greater than or equal to 0, shifting the compressed data to the left by shift bits, to obtain left shifted data; and
when the shift is smaller than 0, respectively shifting the compressed data to the right by -shift bits, to obtain right-shifted data.

6. The method according to claim 4, wherein the step of performing data overflow processing on the compressed data in the shifting processing process comprises:
when the shifted left data is greater than the maximum value of N bits of signed data, setting the left shifted data as, wherein the N bits are the size of the compressed data, and N is the number of the compression points.

7. A method for transmitting data, comprising:
receiving encapsulated data and an encapsulation format control instruction;
decapsulating the encapsulated data by using an Open Radio Access Network, ORAN, protocol according to an encapsulation format control instruction, so as to obtain encapsulated data and a transmission exponent for data transmission;
determining a signal processing scaling exponent and a decompression exponent based on the transmission exponent; and
decompressing the compressed data according to the decompression exponent to obtain data.

8. The method according to claim 7, wherein the step of determining a signal processing scaling exponent and a decompression exponent according to the transmission exponent comprises:
acquiring a maximum transmission exponent among the transmission exponents;
determining a maximum compression exponent according to the bit width M of the decompressed data and the number N of decompression points;
determining a signal processing scaling exponent based on the maximum transmission exponent and the maximum compression exponent; and
determining a decompression exponent based on the transmission exponent and the signal processing scaling exponent.

9. The method according to claim 8, wherein step of determining a maximum compression exponent according to the bit width M of the decompressed data and the number N of decompression points comprises:
determining a first difference value between the bit width M of the decompressed data and the number N of decompression points; and
determining the first difference value as the maximum compression exponent.

10. The method according to claim 8, wherein
determining a signal processing scaling exponent based on the maximum transmission exponent and the maximum compression exponent comprises:
determining a second difference between the maximum transmission exponent and the maximum compression exponent;
determining the second difference value as the signal processing scaling exponent;
determining a decompression exponent based on the transmission exponent and the signal processing scaling exponent comprises:
determining a third difference between the transmission exponent and the signal processing scaling exponent; and
determining the third difference value as the signal decompression exponent.

11. An apparatus for transmitting data, comprising:
a compression module, configured to compress data according to a compression control instruction, so as to obtain compressed data, and acquiring a compression exponent;
a first determination module, configured to determine a transmission exponent during data transmission according to the compression exponent and a signal processing scaling exponent; and
an encapsulation module, configured to encapsulate the compressed data and the transmission exponent based on an Open Radio Access Network, ORAN, protocol according to an encapsulation format control instruction, so as to obtain encapsulated data, and send the encapsulated data.

12. An apparatus for transmitting data, comprising:
a receiving module, configured to receive encapsulated data and an encapsulation format control instruction;
a decapsulation module, configured to decapsulate the compressed data by using an open radio access network, ORAN, protocol according to an encapsulation format control instruction, to obtain encapsulated data and a transmission exponent for data transmission;
a second determination module, configured to determine a signal processing scaling exponent and a decompression exponent based on the transmission exponent;
a decompression module, configured to decompress the compressed data according to the decompression exponent, to obtain data.

13. A computer readable storage medium storing a computer program, wherein the computer program is configured to perform, when running, the method as claimed in any one of claims 1 to 6 and 7 to 10.

14. An electronic device, comprising a memory and a processor, wherein the memory stores a computer program, and the processor is configured to run the computer program to perform the method as claimed in any one of claims 1 to 6 and 7 to 10.
